# EUROPÄISCHE PATENTSCHRIFT

(11) **EP 1 204 821 B1**
(45) Veröffentlichungstag und Bekanntmachung des Hinweises auf die Patenterteilung: **31.03.2004**
(21) Anmeldenummer: 01942993.5
(22) Anmeldetag: 27.04.2001
(51) Int. Cl.: F02M 37/22

(54) **KRAFTSTOFFFILTER FÜR EINEN VERBRENNUNGSMOTOR**
FUEL FILTER FOR AN INTERNAL COMBUSTION ENGINE
FILTRE DE CARBURANT POUR UN MOTEUR A COMBUSTION INTERNE

(30) Priorität: 23.05.2000 DE 10025484
(43) Veröffentlichungstag der Anmeldung: 15.05.2002
(73) Patentinhaber: MAHLE Filtersysteme GmbH, 70376 Stuttgart (DE)
(72) Erfinder: BAUMANN, Peter, 70565 Stuttgart (DE); GEBERT, Hans, 74080 Heilbronn (DE); MILLICH, Ewald, 72555 Metzingen (DE); SCHICK, Albert, 74336 Brackenheim (DE)
(74) Vertreter: Pfusch, Volker, Dipl.-Ing.
(86) Internationale Anmeldenummer: PCT/DE2001/001638
(87) Internationale Veröffentlichungsnummer: WO 2001/090564

(56) Entgegenhaltungen:
- DE-A- 19 753 611
- DE-A- 19 754 243
- US-A- 4 287 917
- US-A- 5 647 330
- US-A- 5 649 561
- PATENT ABSTRACTS OF JAPAN vol. 014, no. 532 (M-1051), 22. November 1990 (1990-11-22) & JP 02 223664 A (JAPAN ELECTRON CONTROL SYST CO LTD), 6. September 1990 (1990-09-06)
- PATENT ABSTRACTS OF JAPAN vol. 014, no. 532 (M-1051), 22. November 1990 (1990-11-22) & JP 02 223665 A (JAPAN ELECTRON CONTROL SYST CO LTD), 6. September 1990 (1990-09-06)

## Beschreibung

Die Erfindung beruht auf dem allgemeinen Gedanken, das Druckregelventil innerhalb des Filtergehäuses schwingungsentkoppelt zu lagern. Denn beim Betrieb des Druckregelventiles treten schwingungserzeugende Druckimpulse auf. Die von den Druckimpulsen erzeugten Schwingungen übertragen sich auf das Filtergehäuse, das entweder direkt und/oder über Anschlußleitungen mit einem von dem Verbrennungsmotor angetriebenen Fahrzeug bzw. dem Motor verbunden ist. Durch von den Druckregelventil auf das Filtergehäuse übertragene Schwingungen entstehen die erfindungsgemäßen zu vermeidenden Geräusche.

Bei dem aus EP 0 702 142 A1 bekannten Kraftstoffilter fehlt die erfindungsgemäße vollständige Schwingungsentkopplung des Druckregelventiles. Dort ist stets zumindest in einem Bereich des Druckregelventiles eine schwingungsübertragende feste Verbindung zwischen Druckregelventil und Filtergehäuse gegeben.

Von den in der Zeichnung dargestellten Ausführungsbeispielen zeigen jeweils in einem Längsschnitt
- Fig. 1: ein Leitungsfilter mit einem zweifach in dem Filtergehäuse schwingungsdämpfend gelagerten Druckregelventil,
- Fig. 2: ein Leitungsfilter mit lediglich über ein schwingungsdämpfendes Lager in dem Filtergehäuse gelagertes Druckregelventil.

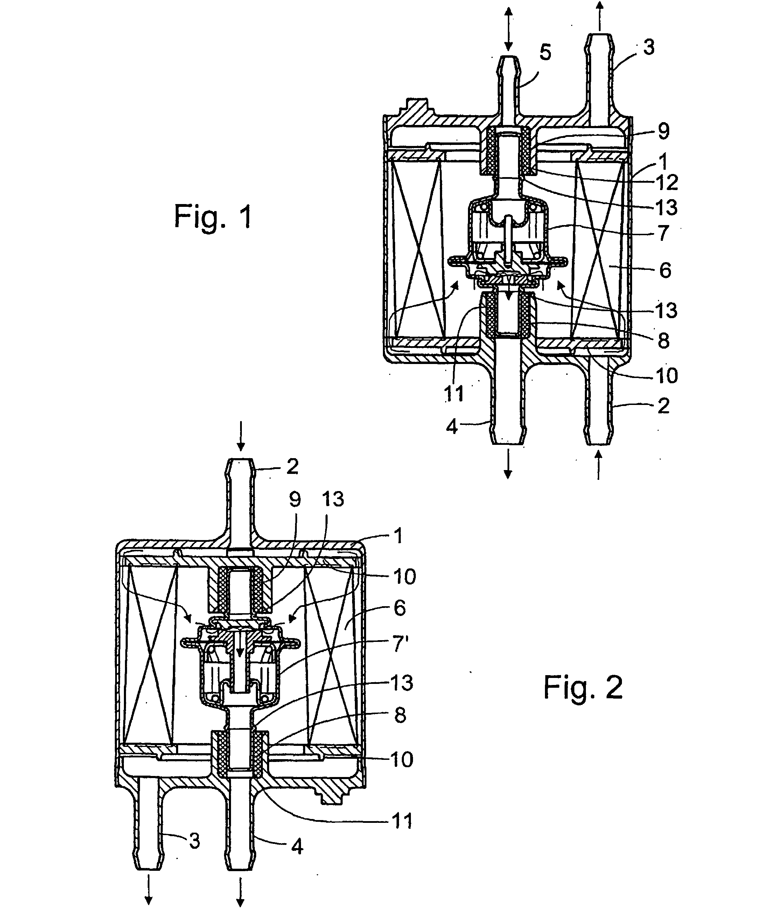

Bei der Ausführung nach Fig. 1 besitzt ein Leitungs-Filtergehäuse 1 aus Metall an seinen gegenüberliegenden Stirnseiten jeweils zwei nach außen abragende, durchströmbare Stutzen 2, 3, 4 und 5. Bei einem Leitungsfilter für einen Verbrennungsmotor haben diese Stutzen 2, 3, 4 und 5 folgende Funktion. Der Stutzen 2 führt von dem Kraftfahrzeugtank stammenden Kraftstoff in das Filtergehäuse 1, in dem dieser Kraftstoff das Ring-Filterelement 6 den eingezeichneten Strömungspfeilen entsprechend von radial außen nach radial innen durchströmt und sodann durch den Stutzen 3 aus dem Filtergehäuse 1 als Vorlauf zu dem Verbrennungsmotor austritt.

Zwischen den Stutzen 4 und 5, deren Funktion nachfolgend noch angegeben wird, ist ein in seinem Aufbau an sich bekanntes Druckregelventil 7 schwingungsgedämpft gelagert. Die schwingungsdämpfenden Lager bestehen jeweils aus verpresst eingesetzten sogenannten Schlauchdichtungen 8 bzw. 9. Durch diese Schlauchdichtungen 8 und 9, die auch beliebige andere Formdichtungen sein können, ist das Druckregelventil 7 im wesentlichen radial und axial ausreichend fest fixiert. Gegen eine axiale Verschiebung des Druckregelventiles 7 bei einem Betrieb des Filters ist dieses durch die Schlauchdichtungen 8, 9 noch zusätzlich durch jeweils einen als axialen Anschlag dienenden, in den Stutzen 4 beziehungsweise 5 eingeformten Ringwulst 13 gesichert. Diese Ringwulste 13 können entweder axial direkt an die jeweils zugeordnete Dichtung 8 beziehungsweise 9 angrenzen oder auch axial in diese eingreifen und diese dabei radial zusätzlich für einen axial rutschfesten Sitz verpressen.

Durch die Schlauch-Dichtungen 8 und 9, die aus elastischem Material bestehen, können Schwingungen von dem Druckregelventil 7 nicht auf das Filtergehäuse 1 übertragen werden; zumindest nicht in einem solchen Maße, daß schwingungsbedingt erzeugte Geräusche durch das Filtergehäuse 1 verursacht werden.

Durch den Stutzen 4 strömt Kraftstoff, der von dem Druckregelventil 7 zum Rücklauf in den Tank freigegeben wird, in den Tank zurück. Über den Stutzen 5 wird das Druckregelventil entlüftet, um in an sich bekannter Weise gegen Atmosphärendruck arbeiten zu können.

Bei der Filterausführung nach Fig. 2 fehlt der bei der Ausführung nach Fig. 1 vorhandene Stutzen 5 zur Entlüftung des Druckreglers 7. Im übrigen ist die Funktion des Leitungsfilters nach Fig. 2 die gleiche wie diejenige bei dem Filter nach Fig. 1. Deshalb sind die funktionsgleichen Teile jeweils mit gleichen Bezugszeichen belegt. Durch den Einsatz eines Druckregelventiles 7', das keinen Entlüftungsstutzen besitzt, ergibt sich bei der Ausführung nach Fig. 2 eine gegenüber derjenigen nach Fig. 1 unterschiedliche Lagerung des Druckreglers 7'. Der bei der Ausführung nach Fig. 1 vorhandene Entlüftungsstutzen 12 ist bei der Ausführung nach Fig. 2 verschlossen, d.h. nicht funktionsfähig, und dient dort lediglich als Halteelement. Während der Druckregler 7' bei seinem einen abragenden Stutzen 11 die gleiche Lagerung aufweist wie bei der Ausführung nach Fig. 1, ist er an seiner gegenüberliegenden Stirnseite in einer geschlossenen Endscheibe 10 des Filterelementes 6 gelagert. Bei einer Ausführung der Endscheibe 10 aus einem dämpfend wirkenden Kunststoff kann auf einen Einsatz eines zusätzlich schwingungsdämpfenden Lagers zwischen dem Druckregelventil 7' und der Endscheibe 10 unter Umständen ganz verzichtet werden. Bei der gezeigten Ausführung ist allerdings ein schwingungsdämpfendes, separates Lager in der Form wiederum einer Schlauchdichtung 9 eingesetzt.

## Patentansprüche

1. Kraftstofffilter für einen Verbrennungsmotor mit einem insbesondere aus Metall bestehenden Filtergehäuse (1) sowie einem darin jeweils gelagerten Filterelement (6) und Druckregelventil,
**dadurch gekennzeichnet,**
**dass** das Druckregelventil (7) schwingungsgedämpft in dem Filtergehäuse (1) gelagert ist.

2. Kraftstofffilter nach Anspruch 1
**dadurch gekennzeichnet,**
**dass** mindestens ein schwingungsdämpfendes Lager (8; 9) vorgesehen ist.

3. Kraftstofffilter nach Anspruch 2,
**dadurch gekennzeichnet,**
**dass** das mindestens eine schwingungsdämpfende Lager (8; 9) bzw. ein schwingungsdämpfendes Lager (8, 9) bei Vorhandensein mehrerer schwingungsdämpfender Lager (8, 9) durch das Filterelement (6) gebildet ist.

4. Kraftstofffilter nach einem der vorhergehenden Ansprüche,
**dadurch gekennzeichnet,**
**dass** an gegenüberliegenden Stirnseiten des Druckregelventiles (7) jeweils unter achsgleicher Anordnung ein schwingungsdämpfendes Lager (8, 9) vorgesehen ist.

5. Kraftstofffilternach einem der vorhergehenden Ansprüche,
**gekennzeichnet durch die Merkmale:**
- das Druckregelventil (7, 7') ist mit mindestens einem nach außen abragenden, durchströmbaren Stutzen (11) ausgerüstet,
- der mindestens eine Stutzen (11) greift radial beabstandet in eine zugeordnete stirnseitige Öffnung des Filtergehäuses (1) ein,
- der Ringraum zwischen dem mindestens einen Stutzen (11) und der zugeordneten Öffnung des Filtergehäuses (1) ist mit zwischen diesem Stutzen (11) und dem Rand der Filtergehäuse-Öffnung verpressten Dichtungsmaterial (8) ausgefüllt.

6. Kraftstofffilter nach Anspruch 5,
**dadurch gekennzeichnet,**
**dass** das Dichtungsmaterial in der Form einer Schlauchdichtung (8, 9) vorliegt.

7. Kraftstofffilter nach einem der vorhergehenden Ansprüche,
**dadurch gekennzeichnet,**
**dass** das Druckregelventil (7) mit zwei etwa achsgleich gegenüberliegenden Stutzen (11, 12) ausgerüstet ist.

8. Kraftstofffilter nach einem der vorhergehenden Ansprüche 1 - 6,
**dadurch gekennzeichnet,**
**dass** ein lediglich mit einem Stutzen (11) ausgerüstetes Druckregelventil (7') sich zusätzlich an einer dem einzigen Stutzen (11) gegenüberliegenden Stirnseite einer angrenzenden Endscheibe (10) des Filterelementes (6) abstützt.

## Claims

1. A fuel filter for an internal combustion engine having a filter housing (1) made of metal in particular and a filter element (6) and a pressure regulating valve, each mounted separately in it,
**characterized in that**
the pressure regulating valve (7) is mounted in the filter housing (1) in such a manner that vibration is damped.

2. The fuel filter according to Claim 1,
**characterized in that**
at least one vibration-damping mount (8; 9) is provided.

3. The fuel filter according to Claim 2,
**characterized in that**
the at least one vibration-damping mount (8; 9) and/or one vibration-damping mount (8, 9) in the case when multiple vibration-damping mounts (8, 9) are provided is formed by the filter element (6).

4. The fuel filter according to one of the preceding claims,
**characterized in that**
a vibration-damping mount (8, 9) is provided on each of the opposite ends of the pressure-regulating valve (7) in a coaxial arrangement.

5. The fuel filter according to one of the preceding claims,
**characterized by** the features:
- the pressure regulating valve (7, 7') is equipped with at least one flow-through connection (11) which projects outward,
- the at least one connection (11) engages in a respective opening in the filter housing (1) on the end face at a radial distance,
- the annular space between the at least one connection (11) and the respective opening in the filter housing (1) is filled with sealing material (8) pressed between this connection (11) and the edge of the filter housing opening.

6. The fuel filter according to Claim 5,
**characterized in that**
the sealing material is in the form of a hose gasket (8, 9).

7. The fuel filter according to one of the preceding claims,
**characterized in that**
the pressure-regulating valve (7) is equipped with two approximately coaxial connections (11, 12) at opposite ends from one another.

8. The fuel filter according to one of Claims 1 through 6,
**characterized in that**
a pressure-regulating valve (7') which is equipped with only one connection (11) is additionally supported on an end face of an adjacent end disk (10) of the filter element (6), said end face being opposite the single connection (11).

## Revendications

1. Filtre de carburant pour un moteur à combustion interne présentant un carter de filtre (1) en particulier constitué de métal, ainsi qu'un élément filtrant (6) et une vanne de régulation de pression respectivement supportés dedans,
**caractérisé en ce**
**que** la vanne de régulation de pression (7) est supportée dans le carter (1) de manière amortissant les vibrations.

2. Filtre de carburant selon la revendication 1,
**caractérisé en ce**
**qu'**au moins un palier (8 ; 9) amortissant les vibrations est prévu.

3. Filtre de carburant selon la revendication 2,
**caractérisé en ce**
**qu'**en présence de plusieurs paliers (8, 9) amortissant les vibrations, le palier (8 ; 9) amortissant les vibrations ou un palier (8, 9) amortissant les vibrations est formé par l'élément filtrant (6).

4. Filtre de carburant selon l'une des revendications précédentes,
**caractérisé en ce**
**qu'**aux faces frontales opposées de la vanne de régulation de pression (7) est prévu respectivement un palier (8, 9) amortissant les vibrations disposé dans le même axe.

5. Filtre de carburant selon l'une des revendications précédentes,
**caractérisé par les particularités suivantes :**
- la vanne de régulation de pression (7, 7') est équipée d'au moins une tubulure (11) à passage, saillante vers l'extérieur,
- la tubulure (11) vient en prise radialement à distance dans une ouverture frontale correspondante du carter de filtre (1),
- l'espace annulaire compris entre la tubulure (11) et l'ouverture correspondante du carter de filtre (1) est rempli. d'un élément d'étanchéité (8) pressé entre cette tubulure (11) et le bord de l'ouverture du carter de filtre.

6. Filtre de carburant selon la revendication 5,
**caractérisé en ce,**
**que** l'élément d'étanchéité est présent sous la forme d'un joint d'étanchéité tubulaire (8, 9).

7. Filtre de carburant selon l'une des revendications précédentes,
**caractérisé en ce**
**que** la vanne de régulation de pression (7) est équipée de deux tubulures (11, 12) opposées situées sensiblement dans le même axe.

8. Filtre de carburant selon l'une des revendications précédentes 1 à 6,
**caractérisé en ce**
**qu'**une vanne de régulation de pression (7') pourvue de seulement une tubulure (11) prend en outre appui, à une face frontale opposée à l'unique tubulure (11), sur un disque d'extrémité (10) contigu de l'élément filtrant (6).
